# EUROPEAN PATENT APPLICATION

(11) **EP 4 782 078 A1**
(43) Date of publication of application: **29.07.2026**
(21) Application number: 25215557.7
(22) Date of filing: 13.11.2025
(51) Int. Cl.: A63F 13/352, A63F 13/358

(54) **GAME SYSTEM, METHOD FOR DISTRIBUTED DATA PROCESSING, AND PROGRAM FOR DISTRIBUTED DATA PROCESSING**

(30) Priority: 28.01.2025 JP 2025011904
(71) Applicant: SNK Corporation, Osaka-shi, Osaka 5320003 (JP)
(72) Inventor: TERAI, Takatoshi, OSAKA-SHI, OSAKA (JP); SATO, Yukitoshi, NAGOYA-SHI, AICHI (JP)
(74) Representative: Algemeen Octrooi- en Merkenbureau B.V.

(57) **Abstract**

A game system (1) for multiplayer games in which a considerable number of players participate, the game system (1) comprising: a plurality of game servers (300) running a server program that performs game processing, wherein each of the game servers (300) includes: a receiver (10) that receives, from among a plurality of player terminals (100) of the players, an operation on a character operated by a player from a player terminal (100) connected to its own server (300); a processor (20) that performs game processing for the operation; and a controller (40) in charge of different sections within the same area under management of the game servers (300) and that, when a character of a player moves from one section to an adjacent section, receives, from another server (300) in charge of the adjacent section, information on a character of a player present in the adjacent section to the one section, and performs all processing for the player corresponding to the character present in the section of which the controller (40) is in charge on the basis of the received information.

## Description

### BACKGROUND OF THE INVENTION

### 1. Field of the Invention

This invention relates to a game system, a method for distributed data processing, and a program for distributed data processing. More specifically, it relates to an online game in a server-client model over a network.

### 2. Description of Related Art

In online competitive games using network communication (such as battle royale, team battle, sports, or racing games), multiple clients (player terminals) are connected to a single server, and movements and action information of each player are synchronized with other players through the communication via the server, thereby embodying multiplayer simultaneous play among players connected to the server conventionally. In the example represented by large-scale online role-playing games (RPGs), a vast map is divided into areas and individual servers are assigned to each area, thereby distributing a considerable number of players to each area. If players wish to play with players in other areas, they can move from one area to another and gather in the same area, thereby providing an opportunity to interact with more players. Crowded areas may also have multiple servers, thereby providing parallel worlds (commonly called channels) in the same area to distribute the players.

For example, Japanese Unexamined Patent Application Publication No. 2004-57515 discloses a communication game equipment including: a main system having a main CPU, which controls execution of games by game programs; and a communication sub-system having a sub-CPU, which executes a plurality of different communication function tasks. The communication sub-system includes a shared memory accessible by the main CPU and the sub-CPU, and the communication sub-system has a resource management task function, which manages resources of the shared memory for the plurality of different communication function tasks.

Japanese Unexamined Patent Application Publication No. 2007-98162 discloses a network game system in which a plurality of characters including a plurality of player characters manipulated in correspondence to information input by users each operating one of a plurality of client devices connected to a server apparatus via a network and a plurality of computer characters whose actions are automatically manipulated. The client devices each comprise: a storage unit for storing character information including position information indicating the positions of the plurality of characters, and registering computer characters to be managed at the subject client device among the computer characters as relegated characters; an arithmetic operation unit for obtaining through arithmetic calculation updated character information indicating the extent of change occurring in the position of a relegated character and the extent of change occurring in the motion of the relegated character in correspondence to each of the relegated characters by using the character information stored at the storage unit as the game progresses; and a communication unit for transmitting the updated character information corresponding to each relegated character having been obtained through the arithmetic calculation to the server apparatus as a character information packet. The server apparatus receives the transmitted character information packet and transmits the received character information packet to other client devices participating in the game; and the other client devices receive the transmitted character information packet and stores the updated character information based upon the received character information.

In addition, Japanese Unexamined Patent Application Publication No. 2007-528762 discloses a distributed data processing method by an online game server. The method includes the steps of: maintaining a zone information database for storing game map data that is divided into at least one game zone; allocating zone servers for implementing instruction processing with respect to a user character, to each of the game zones; mapping an indication area indicated on a predetermined display means, on the game map data, and identifying a game zone at which the mapped indication area is located; and connecting a predetermined client to a zone server that is allocated to the identified game zone. The step of connecting a predetermined client to a zone server that is allocated to the identified game zone includes the steps of: connecting the client to a first zone server of a first game zone at which a predetermined user character is located; defining a section of the first game zone as a buffer sector, based on a boundary with a second game zone, where the second game zone is adjacent to the first game zone; and in case that the indication area includes at least one section of the buffer sector, connecting the client to the second zone server.

Further, Japanese Unexamined Patent Application Publication No. 2004-097548 discloses game information for enabling a computer-like apparatus including communication means for performing data communication with various servers via a communication line to function as: an account processing means for accessing an account server to perform account processing; a network game executing means that, when the account processing is performed by the account processing means, automatically accesses a first game server to execute a first network game, and that, when an access status between the account processing means and the account server satisfies an access failure condition, automatically accesses a second game server to execute a second network game.

In competitive games where game processings are performed on a single server, the number of players that can play simultaneously is limited by the performance of the game server machine. For example, in battle royal games, the maximum number of participants in a single play is often around 60 to 120. The reason for this is that the computation of interaction processing such as collisions and attacks between players and the amount of communication processing between server and client increases in proportion to the number of players, and thus the number of players that can be processed by one server is physically limited. If the number of players exceeds this limit, network delays and disconnections will occur, and the real-time nature of the game will be compromised. In addition, in area-divided server configurations such as large-scale online RPGs, players are not capable of recognizing appearance with each other or engaging in interaction such as attacks between different areas or different channels, rendering cooperation or competition impossible. To increase the number of players that can be processed by a single server, game processing such as movement, attacks, collision determinations and damage computations are not performed on the server but on the client (e.g., P2P games). However, the game processing is performed on the terminal of the player, thereby facilitating hacking (cheating) the game processing. To prevent cheat damages, important and heavy load processes such as collision detection need to be performed on the server, and as a result, the number of players that can participate simultaneously depends on the processing power of the server. As a result, large-number-player games that are resistant to cheating (i.e., highly tamper-resistant) and exceed the size of about 100 players have problems in that they are physically unfeasible with conventional technology. Even when multiple game servers are used to process games, for example, in the case of JP 2007-528762 A above, the area (game zone) of which each server is in charge need to overlap with the adjacent area to some extent, increasing the capacity needed by the server or the number of needed servers.

### SUMMARY OF THE INVENTION

In view of the above, the present invention has been made in view of the above circumstances, and provides a game system, a method for distributed data processing, and a program for distributed data processing that enable a greater number of players to participate simultaneously with tamper resistance and real-time performance of the game being maintained in comparison to conventional online games, allowing interaction between players connected to different servers, which has been impossible in conventional online games having an area-divided server configuration.

That is, a game system according to a first aspect is directed to a game system for multiplayer games in which a considerable number of players participate. The game system includes: a plurality of game servers running a server program that performs game processing. Each of the game servers includes: a receiver that receives, from among a plurality of player terminals of the players, an operation on a character operated by a player from a player terminal connected to its own server; a processor that performs game processing for the operation; and a controller in charge of different sections within the same area under management of the game servers and that, when a character of a player moves from one section to an adjacent section, receives, from another server in charge of the adjacent section, information on a character of a player present in the adjacent section to the one section, and performs all processing for the player corresponding to the character present in the section of which the controller is in charge on the basis of the received information.

In a second aspect, in the game system according to the first aspect, each of the game servers that may, when the one section overlaps with the adjacent section and a character of a player terminal connected to its own server is present in an overlapping area and/or a surrounding area thereof, write data of the character into a shared memory, refer to the shared memory to identify whether a character of a player terminal connected to the other server is present in the overlapping area and/or the surrounding area thereof, read information of the identified character, and display the character on the game area.

A method for distributed data processing according to a third aspect is directed to a method for distributed data processing for multiplayer games in which a considerable number of players participate. The method causes a plurality of game servers running a server program that performs game processing to perform: a receiving step of receiving, from among a plurality of player terminals of the players, an operation on a character operated by a player from a player terminal connected to its own server; a processing step of performing game processing for the operation; and a controlling step for performing control associated with different sections within the same area under management of the game servers, the controlling step including receiving, when a character of a player moves from one section to an adjacent section, from another server in charge of the adjacent section, information on a character of a player present in the adjacent section to the one section, and performing all processing for the player corresponding to the character present in the section with which the controlling step performs associated control on the basis of the received information.

A program for distributed data processing according to a fourth aspect is directed to a program for distributed data processing for multiplayer games in which a considerable number of players participate. The program causes a plurality of game servers with server programs running for game processing to embody: a receiving function that receives, from among a plurality of player terminals of the players, an operation on a character operated by a player from a player terminal connected to its own server; a processing function that performs game processing for the operation; and a controlling function that performs control associated with different sections within the same area under management of the game servers, wherein the controlling function receives, when a character of a player moves from one section to an adjacent section, from another server in charge of the adjacent section, information on a character of a player present in the adjacent section to the one section, and performs all processing for the player corresponding to the character present in the section with which the controlling function performs associated control on the basis of the received information.

The game system, method for distributed data processing, and program for distributed data processing according to the present invention enable a greater number of players to participate simultaneously with tamper resistance and real-time performance of the game being maintained in comparison to conventional online games, allowing interaction between players connected to different servers, which has been impossible in conventional online games having an area-divided server configuration.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a diagram illustrating a relationship among player terminals, communication network, and a server machine of a game system according to an embodiment of the present invention,
FIG. 2 shows a block diagram illustrating functions of the server machine of the game system according to the embodiment of the present invention,
FIG. 3 shows a diagram illustrating a play field of the game system according to the embodiment of the present invention,
FIG. 4 shows a block diagram illustrating functions of the game server of the game system according to the embodiment of the present invention,
FIG. 5 shows a diagram illustrating a case where areas of the player terminals in the game system are overlapped,
FIG. 6 shows a diagram illustrating processing for a shared memory of multiple game servers in the game system according to the embodiment of the present invention,
FIG. 7 shows an example of a flowchart illustrating processing of a game server for method for distributed data processing according to the embodiment of the present invention, and
FIG. 8 shows a flowchart illustrating details of a controlling step of the processing of the game server for the method for distributed data processing according to the embodiment of the present invention.

### DETAILED DESCRIPTION OF EMBODIMENTS

A game system 1, a method for distributed data processing, and a program for distributed data processing according to the present embodiment are characterized in that they use shared memory 800. Specifically, when a character of a player connected to its own server moves into an overlapping area and/or a surrounding area thereof, that is, within a memory sharing start setting distance, a game server process 700 writes information of the character of the player into a shared memory 800. That is, information on characters within a certain distance from an area adjacent to the area where the character of the player connected to its own server is located can also be written into the shared memory 800. The certain distance may be set for each of the characters. For example, a huge character such as a dragon needs to be visible from a distance, and thus the distance to be written into the shared memory 800 may be set longer. That is, it is written into the shared memory 800 even if it is far away from the adjacent area and is visible from a distance of the adjacent area.

An object of the present embodiment is to allow interaction between players connected to different servers, which has been impossible in conventional online games with a area-divided server configuration. An advantageous effect of the present embodiment is in allowing players connected to different areas or channels to meet, cooperate, and play against each other in real time through shared memory, which has been impossible in existing area-divided online games. It also increases the number of players that can simultaneously interact with each other in comparison to the conventional one-process-one-game configuration. Further, the number of players that can interact with each other increases as the number of cores of the server machine increases, thus solving the existing problem of trade-off between the amount of server processing needed to maintain tamper resistance and the number of players that can participate in the game. JP 2007-528762 A described above discloses a step of connecting the first zone server of the first game zone to the client and a step of defining a part of the first game zone as a buffer sector on the basis of the boundary with the second game zone. In contrast, in the present embodiment, a shared memory is used to handle the boundary. Specifically, the present embodiment differs from the invention of JP 2007-528762 A in that the game server process 700 writes information on the character of a player connected to its own server into the shared memory 800 when the character of the player moves to the overlapping area and/or the surrounding area thereof. In addition, in the case of JP 2007-528762 A, when the user character enters the overlapping area and/or the surrounding area thereof, the user is connected to the adjacent server, and thus the processing load increases due to the process of switching the connected server each time the user moves in the overlapping area and/or the surrounding area thereof. However, the configuration according to the present embodiment is capable of limiting the increase in processing load.

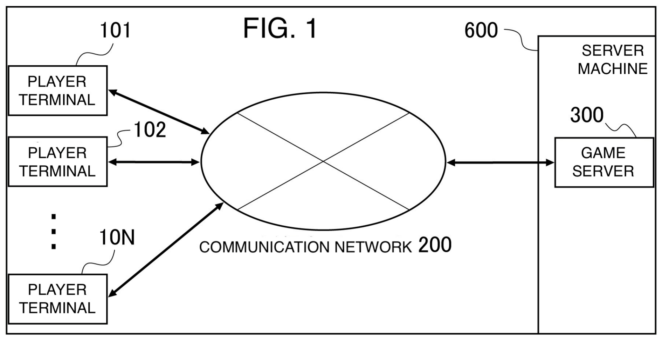

With reference to FIG. 1, a configuration of the game system 1 according to an embodiment will be described. FIG. 1 shows a schematic diagram illustrating an example of the configuration of the game system 1 according to the present embodiment. The game system according to the present embodiment is directed to a game system, which is executable on an information terminal (which may be, but is not limited to, a personal computer, tablet terminal, smartphone, or dedicated game machine), where the information terminal of each of multiple players is connected to the corresponding game server 300 via a communication network 200, allowing the players to play the game simultaneously. The game servers 300 may be mounted within the server machine 600 and run by the server machine 600. Here, each of the game servers 300 and the information terminal owned by each player are connected via a communication network 200, for example, to enable bidirectional communication. The game system 1 may be a server-client type game system. As shown in FIG. 1, the game system 1 includes player terminals 100, a communication network 200, game servers 300, and a server machine 600. A plurality of player terminals such as 101 to 10N form a group, and each player terminal 101 to 10N in the group is connected to one communication network 201 and transmits and receives information to and from the communication network 200. The communication network 200 is connected to each of the game servers 300 in the server machine 600 and transmits and receives information to and from each of the game servers 300.

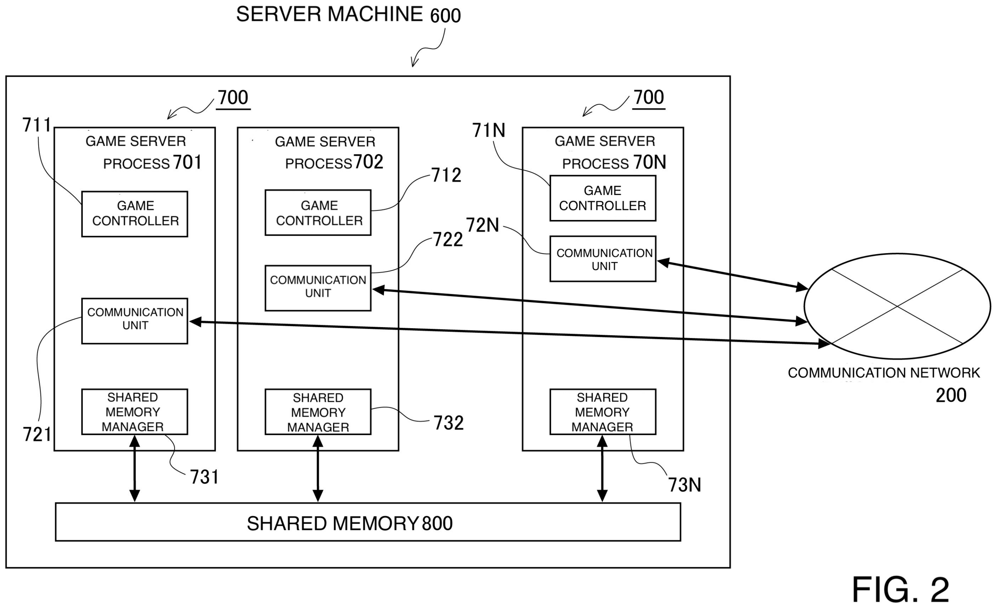

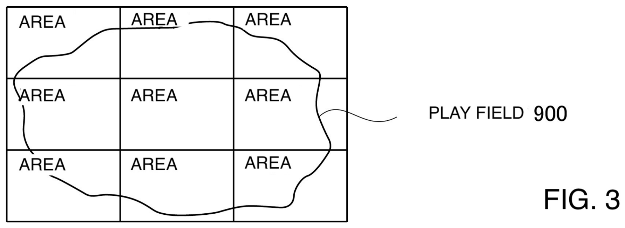

With reference to FIG. 2, the relationship among the server machine 600, multiple game server processes 700, shared memory 800, and communication network 200 of the game system 1 according to the present embodiment will be described. FIG. 2 illustrates the relationship among the server machine 600, multiple game server processes 700, shared memory 800, and communication network 200 of the game system 1 according to the present embodiment. The server machine 600 has several game server processes 700 running, and each process is assigned an area of a play field 900. Each process includes a game processor 710, a communication unit 720, and a shared memory manager 730. The game processor 710 performs game processing such as game progression, character movement, and collision computations; the communication unit 720 connects to the communication network and communicates with the player terminals; and the shared memory manager 730 provides reading/writing functions from/to the shared memory 800. For example, the game system 1 is executed in a virtual space, the play field. As an example, a play field is configured by multiple areas divided in any size and number as shown in FIG. 3. In principle, the player character can move to any area in the play field in accordance with the instructions of the player. The game server processes 700 are provided as a plurality of processes 701 to 70N, and for each game server process 700, the game controllers 710 are provided as a plurality of game controllers 711 to 71N, and the communication units 720 are provided as a plurality of communication units 721 to 72N. The game controller 710 performs processing of a character of the player connected to its own server, receives information of a character of the player connected to another server, and causes a player terminal connected to its own server to display the character of the player of the player terminal connected to the other server. The communication unit 720 communicates with the communication network 200 and transmits and receives information to and from the communication network 200. The shared memory manager 730 communicates with the shared memory 800 and manages what has been written to the shared memory 800. The shared memory 800 is directed to an interprocess communication technique, and a way to exchange data among multiple game servers running simultaneously. One process creates an area in memory that can be accessed by other processes. A process is directed to a processing.

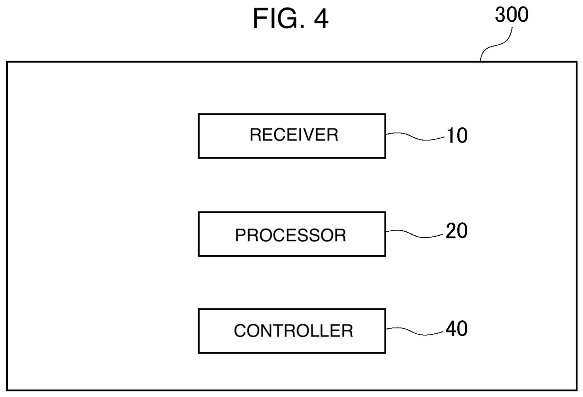

With reference to FIG. 3, the relationship between the game server process 700 and the play field 900 of the game system 1 according to the present embodiment will be described. FIG. 3 is a diagram illustrating the relationship between the game server process 700 and the play field 900 of the game system 1 according to the present embodiment. As shown in FIG. 3, each game server process 700 creates one corresponding area. This one area is one of the divisions of the play field 900. The play field 900 extends across areas. A character of the player connected to one game server process 700 is present on the area created by the game server process 700. A character of the player can move across areas. Areas have some overlap. The method in JP 2007-528762 A described above include the steps of connecting the client to the first zone server of the first game zone and defining a section of the first game zone as a buffer sector, based on a boundary with a second game zone. In contrast, the present embodiment differs from the method in JP 2007-528762 A in that it uses shared memory to perform the boundary processing as shown in FIG. 4 below.

With reference to FIG. 4, the functions of each of the game servers 300 of the game system 1 according to the present embodiment will be described. FIG. 4 shows a block diagram illustrating the functions of each of the game servers 300 in the game system 1 according to the present embodiment. Each of the game servers 300 includes a receiver 10, a processor 20, and a controller 40.

The receiver 10 receives, from among a plurality of player terminals of a plurality of users, inputs from the player terminal connected to its own server, including operations on a character operated by the user, text or voice of chat, and also inputs other than operations for the character, such as scene transitions and stage progress. The operations on a character are directed to, for example, moving the character forward, rearward, to the right, or to the left.

The processor 20 performs game processing for the operations. The game processing is directed to moving the character in accordance with the operations received by the receiver 10.

The controller 40 performs processing of a character of the player connected to its own server, receives information of a character of the player connected to another server, and causes a player terminal connected to its own server to display the character of the player connected to the other server. In addition, with respect to the game, each player terminal is running the basic program of the game, which may be embodied in a form in that the player terminal is communicated information by the controller 40 about where, by whom, and what characters are present and doing, and the game program of the player terminal refers to the communicated information and displays it on the map on the game program.

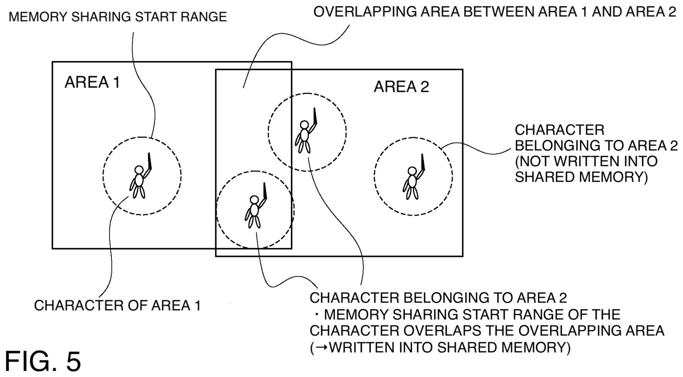

With reference to FIG. 5, a case where areas of player terminals in the game system 1 according to the present embodiment are overlapped will be described. FIG. 5 shows a diagram illustrating a case where areas of the player terminals in the game system 1 according to the present embodiment are overlapped. As shown in FIG. 5, each of multiple areas has a boundary with its adjacent area that partially overlaps. The game server of area 2 writes character information (such as character ID, appearance and motion information, and position coordinates) of characters located in the overlapping area with the adjacent area 1 and/or in the surrounding area thereof into the shared memory 800, and each of the game servers 300 in charge of the adjacent area 1 reads the character information from the shared memory 800 and performs interaction processing with characters in its own server. The players connected to the area 1 are capable of receiving character information in the area 2 duplicated on the area 1 via the communication network 200 and reflecting the character information originally in the area 2 on the screen.

When a character of the player connected to its own server moves to an overlapping area in the area, the game server process 700 writes information on the character to the shared memory 800. If the character is present in the overlapping area or in the area controlled by the own server, the in-game processing of the character is performed. If the character moves from the overlapping area to another area, the in-game processing of the character is transferred to the other game server process in charge of the other area, and the own server terminates the in-game processing of the character. The information on the character in the area 2 can be written into the shared memory 800, thereby allowing players controlling characters in other areas to see the character.

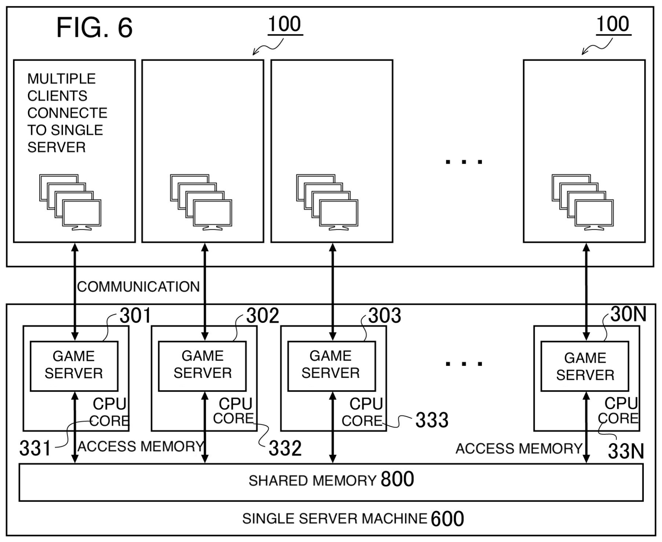

With reference to FIG. 6, the processing of each of the multiple game servers 300 of the game system 1 according to the present embodiment for the shared memory 800 will be described. FIG. 6 shows a diagram illustrating the processing of each of the multiple game servers 300 of the game system 1 according to the present embodiment for the shared memory 800. As shown in FIG. 6, multiple player terminals are each connected to one of the multiple game servers 300. Each of the multiple player terminals communicates with the respective one of multiple game servers 300 (game servers 301 to 30N). This allows the characters of the players in the game to interact with each other. Each of the game servers 300 (game servers 301 to 30N) includes a CPU, and the CPU includes a CPU core 330. The game server 300 uses this CPU core 330 to access memory in the shared memory 800. The CPU core 330 corresponds to a core where the CPU performs its processing operations.

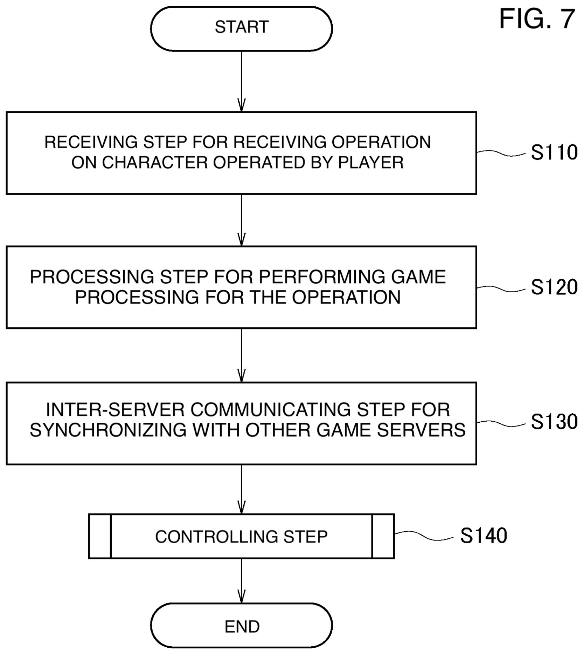

With reference to FIG. 7, the program for data distributed processing according to the present embodiment will be described along with the method for data distributed processing. FIG. 7 shows an example of a flowchart of the method for distributed data processing according to the present embodiment.

The method for distributed data processing is executed by each of the game servers 300 of the game system 1 on the basis of the program for distributed data processing.

The program for distributed data processing includes a receiving step S110, a processing step S120, and a controlling step S140.

The program for distributed data processing causes each of the game servers 300 in the game system 1 to perform receiving, processing, and controlling functions. These functions are performed in the order shown in the flowchart in FIG. 7, but the order may be swapped as appropriate.

The receiving function receives, from among a plurality of player terminals of a plurality of players, an operation on a character operated by the player from the player terminal connected to its own server (step S110: receiving step).

The processing function performs game processing for the operation (step S120: processing step).

The controlling function performs processing of a character of the player connected to its own server, receives information of a character of the player connected to another server, and causes a player terminal connected to its own server to display the character of the player of the player terminal connected to the other server (step S140: controlling function).

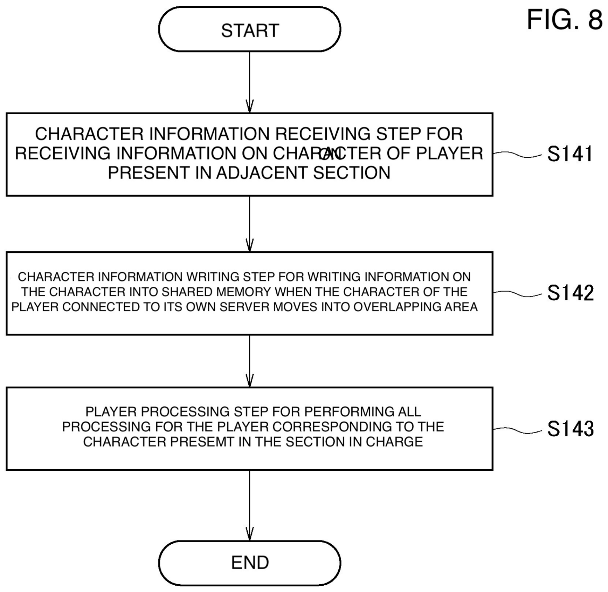

Next, FIG. 8 is referred to, which illustrates the details about the controlling step S140 of the method for distributed data processing according to the present embodiment. The controlling step S140 includes character information receiving step S141, character information writing step S142, and player processing step S143. In the character information receiving step S141, the game controller 710 checks itself for information on the character of the player in the adjacent section. The game controller 710 accesses the shared memory corresponding to the overlapping area of the area of which the server is in charge, and if character information is written to the shared memory, reads this character information and performs the display process of the virtual character. In the player processing step S143, the game controller 710 handles all the processings of the players corresponding to the characters in the section of which its own server is in charge.

### About Functions and Circuits

Next, functions and circuitry of the game system 1 described above will be described.

The functional units of each of the game servers 300 may be embodied as functions of a computer arithmetic processor, for example. That is, each of the game servers 300 may be embodied as a receiving function, a processing function, and a controlling function, respectively, by a computer arithmetic processor, for example.

The program for data distributed processing is capable of causing a computer to embody the functions described above. The program for data distributed processing may be recorded on a non-transitory computer-readable storage medium such as a memory, solid state drive, hard disk drive, or optical disk, for example. The storage medium may be rephrased as a non-transitory computer readable medium that stores, for example, a program for data distributed processing. The program for data distributed processing may also be transmitted online.

The computer arithmetic processor, for example, described above may be configured by, for example, an integrated circuit. That is, each of the game servers 300 of the game system 1 may be embodied as a receiving circuit, a processing circuit, and a controlling circuit configuring a computer arithmetic processor, for example.

The present invention is not limited to the game system 1, method for distributed data processing, and program for distributed data processing according to the embodiment above, but may be implemented by various other variations or applications if they do not depart from the spirit of the present invention recited in the claims. In the embodiment described above, the word "information" is used, but the word "information" can be rephrased as "data" and the word "data" can be rephrased as "information."

### Description of Reference Numerals

1: Game System
10: Receiver
20: Processor
110: Controller
100: Player Terminal
200: Communication Network
300: Game Server
330: CPU Core
600: Server Machine
700: Game Server Machine
710: Game Controller
720: Communication Unit
730: Shared Memory Manager
800: Shared Memory
900: Play Field

## Claims

1. A game system (1) for multiplayer games in which a considerable number of players participate, the game system (1) comprising:
a plurality of game servers (300) running a server program that performs game processing, wherein
each of the game servers (300) includes:
a receiver (10) that receives, from among a plurality of player terminals (100) of the players, an operation on a character operated by a player from a player terminal (100) connected to its own server (300);
a processor (20) that performs game processing for the operation; and
a controller (40) in charge of different sections within the same area under management of the game servers (300) and that, when a character of a player moves from one section to an adjacent section, receives, from another server (300) in charge of the adjacent section, information on a character of a player present in the adjacent section to the one section, and performs all processing for the player corresponding to the character present in the section of which the controller (40) is in charge on the basis of the received information.

2. The game system (1) according to claim 1, wherein each of the game servers (300) that, when the one section overlaps with the adjacent section and a character of a player terminal (100) of which the game server (300) is in charge is present in an overlapping area and/or a surrounding area thereof, writes data of the character into a shared memory (800), refers to the shared memory (800) to identify whether a character of a player terminal (100) of which the other server (300) is in charge is present in the overlapping area and/or the surrounding area thereof, reads information of the identified character, and displays the character on the game area.

3. A method for distributed data processing for multiplayer games in which a considerable number of players participate, the method causing a plurality of game servers (300) running a server program that performs game processing to perform:
a receiving step of receiving, from among a plurality of player terminals (100) of the players, an operation on a character operated by a player from a player terminal (100) connected to its own server (300);
a processing step of performing game processing for the operation; and
a controlling step for performing control associated with different sections within the same area under management of the game servers (300), the controlling step including receiving, when a character of a player moves from one section to an adjacent section, from another server (300) in charge of the adjacent section, information on a character of a player present in the adjacent section to the one section, and performing all processing for the player corresponding to the character present in the section with which the controlling step performs associated control on the basis of the received information.

4. A program for distributed data processing for multiplayer games in which a considerable number of players participate, the program causing a plurality of game servers (300) running a server program that performs game processing to embody:
a receiving function that receives, from among a plurality of player terminals (100) of the players, an operation on a character operated by a player from a player terminal (100) connected to its own server (300);
a processing function that performs game processing for the operation; and
a controlling function that performs control associated with different sections within the same area under management of the game servers (300), wherein the controlling function receives, when a character of a player moves from one section to an adjacent section, from another server (300) in charge of the adjacent section, information on a character of a player present in the adjacent section to the one section, and performs all processing for the player corresponding to the character present in the section with which the controlling function performs associated control on the basis of the received information.
